# EUROPÄISCHE PATENTSCHRIFT

(11) **EP 0 854 427 B1**
(45) Veröffentlichungstag und Bekanntmachung des Hinweises auf die Patenterteilung: **21.04.2004**
(21) Anmeldenummer: 98100640.6
(22) Anmeldetag: 15.01.1998
(51) Int. Cl.: G06F 12/06

(54) **Selbstkonfigurierendes modulares Elektroniksystem, insbesondere Computersystem**
Self-configuring modular electronic system, particularly computer system
Système électronique modulaire à autoconfiguration, notamment système d'ordinateur

(30) Priorität: 17.01.1997 DE 19701508
(43) Veröffentlichungstag der Anmeldung: 22.07.1998
(73) Patentinhaber: Brinkhus, Hartmut B., Dr., 69126 Heidelberg (DE)
(72) Erfinder: Brinkhus, Hartmut B., Dr., 69126 Heidelberg (DE)
(74) Vertreter: von Bülow, Tam, Dr.

(56) Entgegenhaltungen:
- EP-A- 0 491 480
- US-A- 5 434 516

## Beschreibung

Die Erfindung bezieht sich auf ein selbstkonfigurierendes modulares Elektroniksystem, insbesondere Computersystem gemäß dem Oberbegriff des Patentanspruches 1.

Die EP 0 491 480 A2 beschreibt ein Computersystem mit einem Daten- und Adressbus, der mehrere Steckerplätze für den Anschluß einzelner Baugruppen aufweist. Zwischen den einzelnen Baugruppen sind Busleitungspaare nach einem binären Muster miteinander vertauscht, was eine Steckplatzcodierung ermöglicht, wobei die einzelnen Baugruppen jeweils eine Schaltung zur Rückvertauschung der Signale aufweisen. Während einer Initialisierungsphase des Computers erfolgt durch Ausschalten eines Reset-Signals eine Configurierung der angeschlossenen Baugruppen.

Aus der US-5,434,516 ist eine Schaltung für einen SCSI-Bus bekannt, die in Abhängigkeit von der Belegung der einzelnen Bus-Steckplätze einen Bus-Abschluß zu- bzw. abschaltet.

Die US-4,727,475 zeigt ein selbstkonfigurierendes modulares Computersystem mit einer Zentraleinheit und mehreren an einen Bus angeschlossenen Modulen. Ein von der Zentraleinheit erzeugtes Aufrufsignal wird von dem der Zentraleinheit am nächsten gelegenen Modul empfangen, das ein Identifikationszeichen auf die Datenleitungen des Systembus sendet. Die Zentraleinheit empfängt dieses Identifikationszeichen, speichert es in einer Tabelle und weist darauf dem entsprechenden Modul eine Basisadresse zu. Nach Empfang der Basisadresse sendet das entsprechende Modul ein Abrufsignal an das nächste Modul des Systembus. Dieser Vorgang wird solange wiederholt, bis alle Module eine Busbasisadresse zugewiesen bekommen haben.

Dieses System setzt voraus, daß jedes Modul zum Beginn des Adreßzuweisungsvorganges eine individuelle Kennung hat, damit alle Module der Reihe nach individuell angesprochen werden können.

Die DE-33 47 357 A1 beschreibt eine ähnliche Einrichtung zum Vergeben von Adressen an steckbare Baugruppen, bei der jeder Baugruppe eine kennzeichnende Baugruppenkennung eingeprägt ist. Ferner ist jeder Baugruppe eine Steckplatzkennung mitgeteilt. Während einer Initialisierungsphase werden alle Baugruppen über die Steckplatzkennungen aufgerufen und teilen einer Steuereinheit ihre jeweilige Baugruppenkennung mit. Von der Steuereinheit werden daraufhin über Adressierung der Steckplatzkennungen den Baugruppen deren relevante Adresse mitgeteilt, die für den weiteren Datenaustausch verwendet werden.

Die DE-29 32 868 A1 beschreibt eine Datenverarbeitungsschaltungsanordnung mit einer Zentraleinheit, an die mehrere Peripheriegeräte angeschlossen sind. Jede Peripherieeinheit hat einen elektrisch programmierbaren Adreßspeicher, wobei jeder Adreßspeicher über eine eigene nur ihm zugeordnete Freigabeleitung mit einer Zentraleinheit verbunden ist. Über diese Freigabeleitung kann jede einzelne Peripherieeinheit angesprochen werden und von der Zentraleinheit eine neue Adresse zugewiesen bekommen.

Die DE-39 38 018 C2 zeigt ein Informationsverarbeitungssystem und ein Verfahren zur Bestimmung dessen Konfiguration. Jeder Steckplatz (Slot) für Module hat eigene Anschlüsse, deren Potentialpegel ein "Slot-ID-Signal" verarbeiten, um den jeweiligen Steckplatz individuell ansprechen zu können. Darauf kann jedem Modul an dem entsprechenden Steckplatz von einer Zentraleinheit eine bestimmte Adresse zugewiesen werden.

Die DE-44 21 344 A1 zeigt eine Zusatzkarte für einen Computer, die eine hardwaremäßig vorgegebene digitale Kennung hat. Über diese Kennung kann jede einzelne Zusatzkarte aufgerufen werden und dann von einer Zentraleinheit eine Adresse für ein Bussystem zugewiesen bekommen.

Allen bekannten Systemen ist somit gemeinsam, daß die einzelnen Module bzw. Steckplätze entweder eine unterschiedliche Initialisierungsadresse haben oder durch zusätzliche, dem jeweiligen Modul bzw. Steckplatz zugeordnete Leitungen ansprechbar sind.

Im ersten Fall ist der Austausch von Modulen oder das Hinzufügen weiterer Module zu einem Bussystem nur eingeschränkt möglich, da sichergestellt sein muß, daß die Initialisierungsadresse jedes Modules mit dem verwendeten Adreßformat kompatibel ist und daß kein weiteres vorhandenes Modul dieselbe Initialisierungsadresse hat.

Beim zweiten System ist der Aufwand an Leitungen enorm groß und weiter wird vorausgesetzt, daß jeder Steckplatz oder jedes Modul entsprechende Zusatzeinrichtungen hat, um über diese zusätzlichen Leitungen angesprochen werden zu können.

Aufgabe der vorliegenden Erfindung ist es, das eingangs genannte selbstkonfigurierende modulare Elektroniksystem dahingehend zu verbessern, daß eine Vielzahl von Baugruppen bei geringem Hardwareaufwand an ein Leitungssystem angeschlossen werden können, wobei auch alle Baugruppen absolut identisch sein können.

Diese Aufgabe wird durch die im Patentanspruch 1 angegebenen Merkmale gelöst. Vorteilhafte Ausgestaltungen und Weiterbildungn der Erfindung sind den Unteransprüchen zu entnehmen.

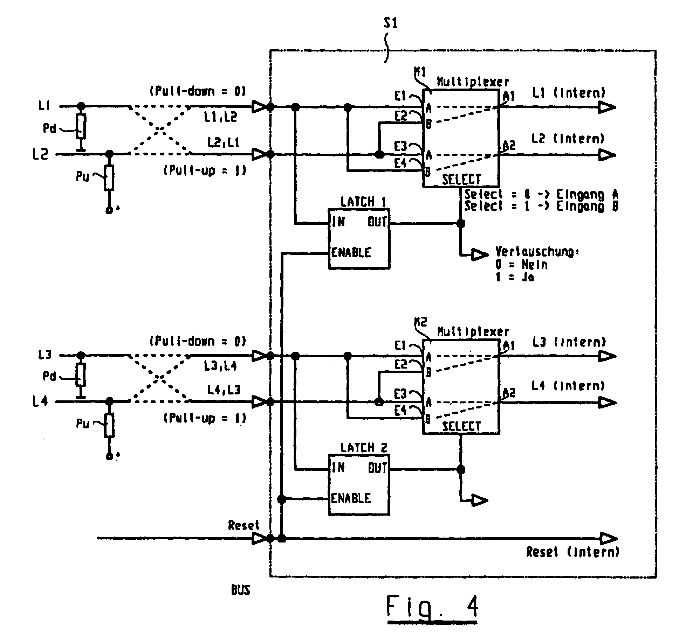

Das Grundprinzip der Erfindung liegt einer der Codierung des Leitungssystems. Bestimmte Leitungen im räumlichen Streckenabschnitt zwischen zwei Modulen werden gekreuzt bzw. miteinander vertauscht, und zwar derart, daß jeder Anschluß eines Modules eine unterschiedliche Konfiguration der Leitungen des Leitungssystems hinsichtlich der Vertauschungen vorfindet. Somit kann man über diese Leitungsvertauschungen jede Anschlußstelle eines Moduls an das Leitungssystem codieren. Das Leitungssystem ist bei einem Computer normalerweise dessen Bussystem. Wenn auch die Erfindung bevorzugt bei Computersystemen anzuwenden ist, sei doch ausdrücklich darauf hingewiesen, daß die Erfindung sich auch bei beliebiger Elektronik einsetzen läßt, bei der mehrere Baugruppen, wie z. B. Chip auf einer oder mehreren Leiterbahnplatten angeordnet sind und die Chips über ein Leitungssystem, also nicht unbedingt ein steckbares Bussystem, miteinander verbunden sind. Auch diese Leitungen werden als Daten- und Adressleitungen verwendet. Somit läßt sich bei solcher Elektronik die sogenannte "Chip-Select"-Leitung einsparen und die einzelnen Chips müßten lediglich eine Zusatzlogik entsprechend Fig. 4 erhalten, so daß die Erfindung auch bei herkömmlichen Chips mit der Zusatzlogik anwendbar ist. Wenn im folgenden von "BUS" oder "Busleitungen" die Rede ist, so sind darunter auch die oben genannten Verbindungsleitungen von elektronischen Baugruppen zu verstehen.

Vorzugsweise werden immer zwei Leitungen eines zugeordneten Leitungspaares nach einem Codierungsmuster vertauscht. Bei Verwendung eines Binärcodes werden beispielsweise auf einem ersten Leitungspaar die Leitungen zwischen jeden Anschlußstellen aufeinanderfolgenden Module vertauscht. Bei einem zweiten Leitungspaar erfolgt die Vertauschung jeweils nach zwei Modulen, bei einem dritten Leitungspaar nach vier Modulen und bei einer Anzahl von n Leitungen dem n/2ten Leitungspaar bei 2^{(n/2)} Modulen. Bei einem 32-Bit-Bus erhält man somit insgesamt 2¹⁶ unterschiedlich codierte Anschlußstellen für 2¹⁶ = 65.536 Module.

Die Initialisierung bzw. Adreßzuweisung der einzelnen Module erfolgt dadurch, daß zu einem bestimmten Zeitpunkt auf einer Steuerleitung wzb. der Reset-Leitung ein Signal, wie z.B. ein Reset-Signal, ausgegeben wird und gleichzeitig allen Busleitungen eine vorgegebene signalkombination eingeprägt wird. Beispielsweise wird auf der ersten Leitung jedes Leitungspaares eine "0" und auf der zweiten Leitung dieses Leitungspaares eine "1" ausgegeben. Jedes Modul liest dann bei Auftreten des Reset-Signales die Signale auf allen oder ausgewählten Busleitungen und erkennt, aufgrund der Vertauschungen, an welcher Stelle des Bus es angeschlossen ist. Bei einem Binärcode stellt beispielsweise das dritte Modul fest, daß das zweite Leitungspaar vertauscht ist während alle übrigen Leitungen unvertauscht sind. Es befindet sich also an der Stelle mit der binären Nummer ...00010, was dezimal der Zahl Zwei entspricht und, wenn man mit der Durchzählung der Module und der Zahl Null beginnt, das dritte Modul bezeichnet.

Jedes Modul kann sich dann selbst durch entsprechende Hardware oder Software seine individuelle Busadresse bestimmen. Beispielsweise kann die erkannte Steckplatznummer Teil der individuellen Busadresse des jeweiligen Moduls sein, indem z.B. die Steckplatznummer den oberen Bit einer Adresse oder eines Adressbereiches entsprechen. Die einzelnen Module brauchen dann keine eigene "Intelligenz" (= CPU) zu haben. Es ist aber auch möglich, daß die entsprechende Busadresse von einer Steuereinheit vergeben wird, entsprechend der auf die oben beschriebene Weise ermittelten Stelle des Moduls im Bussystem.

Die einzelnen Module können dabei selbständige Zentraleinheiten, selbständige Computer oder Peripheripegeräte sein, die alle über ein gemeinsames Bussystem miteinander kommunizieren. Die einzelnen Module können daher über eigene "Intelligenz" verfügen, was aber nicht unbedingt erforderlich ist. Das System ist nahezu beliebig erweiterbar und kann bei dem heute üblichen Bussytem mit 32 Bit, d.h. 32 Datenund Adreßleitungen 2¹⁶, d.h. 65.536 Module, die untereinander absolut identisch sind, handhaben.

Im folgenden wird die Erfindung anhand eines Ausführungsbeispieles, im Zusammenhang mit der Zeichnung, ausführlicher erläutert. Es zeigt:
- Fig. 1: ein Prinzipschaltbild eines selbstkonfigurierenden modularen Computersytems nach der Erfindung;
- Fig. 2: ein Schaltbild eines Teiles des Computersystems zur Darstellung der Anschlüsse einer Baugruppe bzw. eines Modules an das Bussystem; und
- Fig. 3: ein Schaltbild ähnlich Fig. 2 nach einer anderen Variante der Erfindung.
- Fig. 4: ein Prinzipschaltbild einer Baugruppe für eine Identifizierung einer Baugruppe und für eine Rückvertauschung der Busleitungen beim Betrieb des Computersystems nach der Identifizierung der Module.

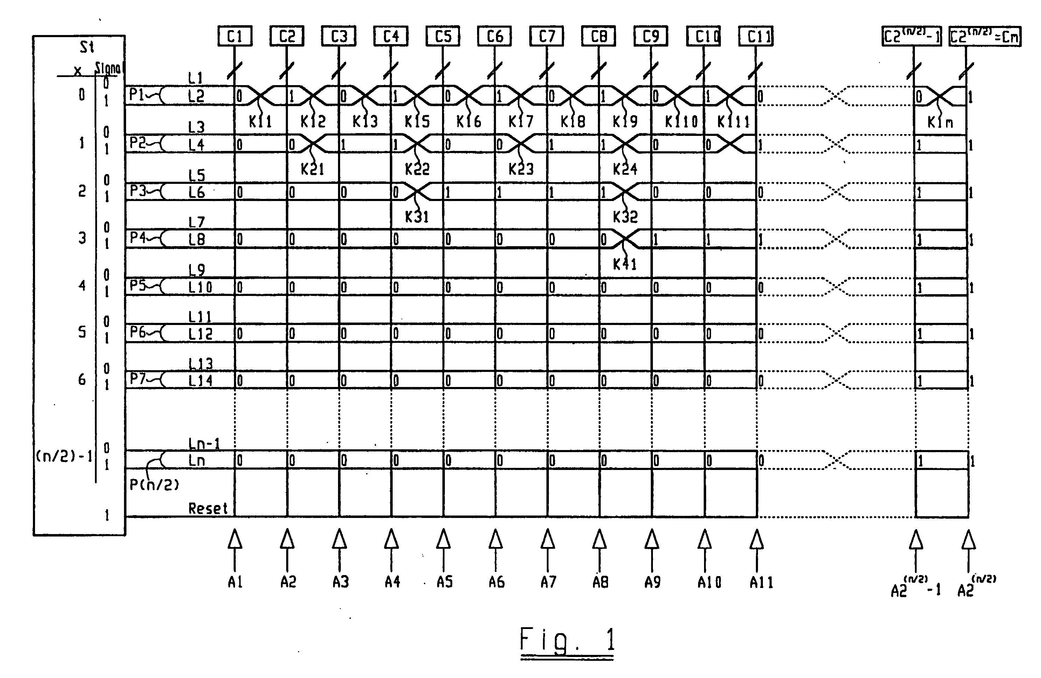

Zunächst wird auf Fig. 1 Bezug genommen.

Das Computersystem der Fig. 1 hat ein Bussystem mit einer Anzahl n von Leitungen L1 bis Ln, die die üblichen Adreßund Datenleitungen eines Bus sind. Zusätzlich verfügt der Bus über eine weitere Leitung, die hier mit "Reset" bezeichnet ist. Sonstige, bei manchen Bussystemen verwendeten zusätzlichen Leitungen sind hier nicht dargestellt, da sie für die Erfindung ohne Bedeutung sind. Bei neueren Bussystemen sind die Adress- und Datenleitungen oft gemultiplext, d.h. verwenden dieselben elektrischen Leitungen für Daten und Adressen, so daß es unerheblich ist, ob Daten-, Adress- oder sonstige Leitungen verwendet werden, weshalb im Folgenden nur von "Leitungen" gesprochen wird. Selbstverständlich können alle sonstigen Busleitungen, wie z.B. Steuerleitungen, Interruptleitungen, etc. - mit Ausnahme der Reset-Leitungen - ebenfalls für die "Codierung" des einzelnen Steckplatzes verwendet werden, wodurch die mögliche Anzahl von Modulen erhöht wird.

Bei dem hier beschriebenen Ausführungsbeispiel sind jeweils zwei Leitungen, beispielsweise die Leitungen L1 und L2, L3 und L4 ..... bis Ln-1, Ln jeweils zu einem Leitungspaar P1 bis P(n/2) zusammengefaßt, die die Ordnungszahl x haben mit x(P1) = 0; x(P₂) = 1; x(P3) = 2 ... x(P_{n/2}) = n/2 - 1. Alle genannten Leitungen sind in Fig. 1 an eine Steuereinheit St angeschlossen, wobei darauf hinzuweisen ist, daß diese "Steuereinheit" durch jegliche Mittel realisiert sein kann, die in einem bestimmten Zeitraum den einzelnen Leitungen vorgegebene Signale einprägen, was beispielsweise auch durch elektrische Widerstände (sogen. Pull-up- und Pull-down-Widerstände) erreicht werden kann.

An dieses Bussystem sind mehrere Baugruppen bzw. Module C1, C2 ..... angeschlossen, die hardwaremäßig absolut identisch sein können. Die Anzahl m der angeschlossenen Baugruppen steht im Belieben des Anwenders und ist nach oben hin durch die Anzahl n der Busleitungen begrenzt. Bei einer Anzahl n Busleitungen können insgesamt m=2^{(n/2)} Baugruppen ange- schlossen werden, wobei jede Baugruppe über jeweils eine eigene mehradrige Leitung mit jeder der Busleitungen L1 bis Ln sowie der Reset-Leitung verbunden ist. Diese Verbindungen erfolgen an räumlich voneinander getrennten Anschlußstellen A1, A2 .... A2^{(n/2)}, die in Längsrichtung der Busleitungen L1 bis Ln gegeneinander versetzt angeordnet sind.

Die einzelnen Leitungen je eines der Paare P1 bis P(n/2) sind nach einem bestimmten Muster im Bereich zwischen benachbarten Anschlußstellen vertauscht, indem die einzelnen Leitungen an zwischen den Anschlußstellen liegenden Kreuzungen K11, K12 .... gekreuzt sind. Diese Kreuzungsstellen entsprechen einer Codierung, wobei im hier dargestellten Ausführungsbeispiel der Binärcode angewandt wird. Selbstverständlich sind auch andere Codierungsarten möglich. Bei der hier dargestellten Codierung bildet das Leitungspaar P1 das niederwertigste Bit mit dem Wert 2⁰, das Leitungspaar P2 das nächsthöherwertige Bit und dem Wert 2¹ und das Leitungspaar P(n/2) das höchstwertige Bit und dem Wert 2ⁿ⁻¹. Unvertauschte Leitungspaare haben bei dieser Codierung die Kennung "0" und vertauschte Leitungspaare die Kennung "1", entsprechend dem Signal auf der zweiten Leitung L2, L4, L6 .... jedes Leitungspaares. Demgemäß werden beim ersten Leitungspaar P1 die Vertauschungen zwischen allen benachbarten Anschlußstellen vorgenommen. An der ersten Baugruppe C1 mit der Anschlußstelle A1 sind die Leitungen unvertauscht. Zwischen den Anschlußstellen A1 und A2 befindet sich eine erste Kreuzungsstelle K11, so daß die Leitungen L1 und L2 an der zweiten Anschlußstelle A2 für die Baugruppe C2 vertauscht sind. Die nächste Kreuzungsstelle K12 befindet sich zwischen den Anschlußstellen A2 und A3, so daß die Leitungen L1 und L2 an der Anschlußstelle A3 wieder unvertauscht sind. Bei dieser Konfiguration ist jeweils an den ungeradzahligen Baugruppen C1, C3, C5 .... keine Vertauschung der Leitungen L1 und L2 vorhanden, während diese Leitungen L1 und L2 an den geradzahligen Baugruppen C2, C4, C6, C8 ..... vertauscht sind.

Entsprechend dem Binärcode sind die Leitungen L3 und L4 des zweiten Leitungspaares P2 an den Kreuzungsstellen K21, K22, K23 ..... nach jeder zweiten Baugruppe vertauscht, also nach jeder geradzahligen Baugruppe C2, C4, C6 .....

Die Leitungen L5 und L6 des dritten Leitungspaares P3 sind nach jeder vierten Anschlußstelle, d.h. nach den Anschlußstellen A4, A8, A12, etc. vertauscht. Verallgemeinert läßt sich sagen, daß für das x-te Leitungspaar (mit der Ordnungszahl x) die entsprechenden Leitungen jeweils nach 2^{(x)} Anschlußstellen vertauscht werden. Bei Verwendung einer anderen Codierung, wie z.B. dem Gray-Code, sind die Vertauschungen an entsprechend anderen Stellen durchzuführen.

Jede Anschlußstelle ist somit mittels der durch die beschriebene Vertauschung bewirkten Codierung eindeutig identifizierbar. Damit die einzelnen Baugruppen C1, C2 ..... identifizieren können an welcher der Anschlußstellen sie angeschlossen sind, wird zu einem vorbestimmten Zeitpunkt, vorzugsweise bei Initialisierung des Systems, auf die erste Leitung jedes Leitungspaares, hier also die ungeradzahligen Leitungen L1, L3, L5 ..... jeweils eine logische 0 und auf die zweiten Leitungen eines Paares, d.h. die geradzahligen Leitungen L2, L4, L6 ..... jeweils eine logische 1 gegeben, was z.B. von der Steuereinheit St oder durch sonstige Maßnahmen, wie z.B. Pull-up- und Pull-down-Widerstände erreicht wird. Der vorbestimmte Zeitpunkt wird durch ein Signal auf der Reset-Leitung, beispielsweise eine logische 1, bestimmt. Jede Baugruppe liest zu diesem Zeitpunkt die entsprechenden Signale auf den Leitungen L1 bis Ln, wobei es beim in Fig. 1 gezeigten Binärcode für die Zwecke der Identifizierung genügt, wenn jede Baugruppe jeweils nur eine Leitung eines Leitungspaares abfragt, beispielsweise die ungeradzahligen Leitungen L1, L3, L5, L7 ...... An der Anschlußstelle A1 sind alle Leitungen unvertauscht. An allen ungeradezahligen Leitungen L1, L3, L5 ..... liegt somit eine logische 0. Die Baugruppe C1 erkennt damit, daß sie an der Stelle mit dem digitalen Wert "000000 ....." liegt, also an der Anschlußstelle A1.

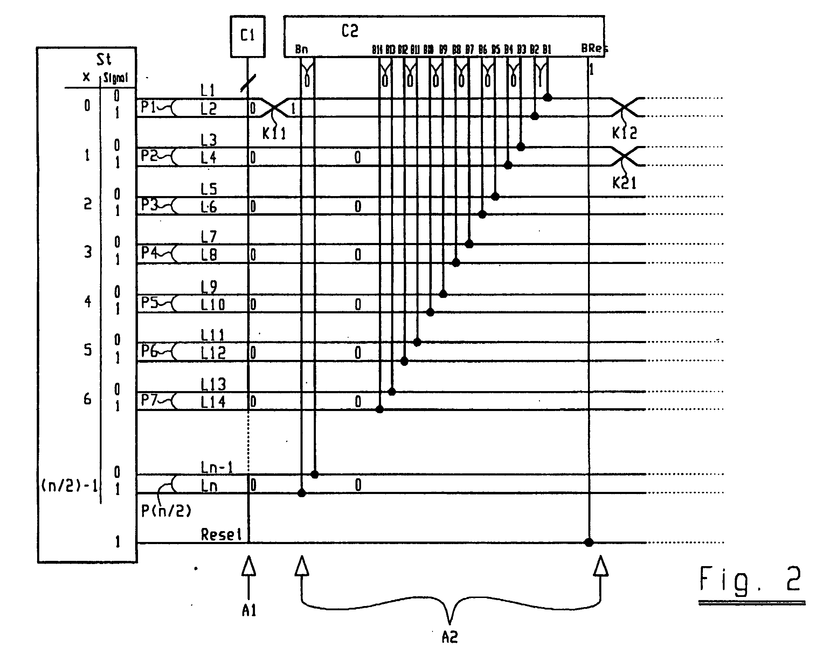

Bei der Baugruppe C2 sind die Leitungen L1 und L2 dagegen vertauscht. Die Baugruppe C2 liest damit an ihrer ersten Leitung B1 in Fig. 2 eine 1 (statt einer 0) und liegt damit an der Stelle mit der digitalen Bezeichnung "000001", also an der zweiten Anschlußstelle A2.

Bei der dritten Baugruppe C3 ist das zweite Leitungspaar vertauscht, alle übrigen Leitungspaare dagegen unvertauscht. An der dritten Leitung B3 liest die Baugruppe C3 somit eine logische 1, an allen übrigen ungeradzahligen Leitungen dagegen eine 0 und erkennt somit die Stelle mit der digitalen Nummer 00010, also die dritte Anschlußstelle A3.

Durch diese hardwaremäßige Codierung der Busleitungen kann jede Baugruppe ihre Anschlußstelle identifizieren. Jede einzelne Baugruppe ist damit von allen anderen Baugruppen eindeutig unterscheidbar. Aufgrund dieser Identifizierung kann dann jeder einzelnen Baugruppe eine individuelle Adresse zugewiesen werden, bzw. sich selbst zuweisen, was hardwareoder rein softwaremäßig durch entsprechende Programmierung erreicht werden kann. Die Zuweisung der entsprechenden Adresse kann somit durch jede einzelne Baugruppe für sich selbst erfolgen, durch die Steuereinheit St, oder auch durch eine oder mehrere auswählte Baugruppen für alle übrigen Baugruppen.

Beim anschließenden Betrieb des Computersystems muß jede Baugruppe C1, C2 ..... entsprechend ihrer Anschlußstelle die Daten- oder Adreßbits von vertauschten Leitungen eines Leitungspaares entsprechend wieder rückvertauschen, was durch eine Hardware-Schaltung (vgl. Fig. 4) auf den einzelnen Baugruppen oder rein softwaremäßig durchgeführt werden kann.

Zusammengefaßt können mit der Erfindung eine sehr große Anzahl absolut identischer Baugruppen an einem Bussystem betrieben werden ohne daß die einzelnen Baugruppen irgendeine eingeprägte Identifizierung haben. Auch der Leitungsaufwand ist gegenüber einem herkömmlichen Busystem nicht größer. Es müssen lediglich entsprechend der oben beschriebenen Codierung einzelne Leitungen des Bussystems vertauscht werden und während eines vorgegebenen Zeitraumes (z.B. während des Reset-Signales) bestimmten Leitungen oder allen Leitungen vorgegebene Signalpegel (0 oder 1) eingeprägt werden.

Fig. 2 zeigt einen Ausschnitt des Computersystems mit zwei Baugruppen C1 und C2 und verdeutlicht, wie die einzelnen Baugruppen, dargestellt am Beispiel der Baugruppe C2, an das Bussystem angeschlossen sind. Jede Baugruppe hat eine der Anzahl der Leitungen L1 bis Ln entsprechende Anzahl von Leitungen B1 bis Bn und zusätzlich eine Reset-Leitung.

Jede der Leitungen B1 bis Bn ist an der Anschlußstelle A2 an die Busleitungen L1 bis Ln angeschlossen und zwar in der an der jeweiligen Anschlußstelle vorgefundenen natürlichen Reihenfolge. So ist die erste Leitung B1 der Baugruppe C2 an die erste Leitung des Bussystems angeschlossen. Die zweite Leitung B2 ist an die zweite Leitung des Bussytems angeschlossen etc. Da an der Anschlußstelle A2 die Leitungen L1 und L2 aufgrund der Kreuzung K11 vertauscht sind, ist die Leitung B1 tatsächlich mit der Leitung L2 verbunden und die Leitung B2 mit der Leitung L1. Da an der Anschlußstelle A2 alle übrigen Leitungen L3 bis Ln nicht vertauscht sind, sind die übrigen Leitungen B3 bis Bn mit den entsprechenden Leitungen L3 bis Ln verbunden. Schließlich ist die Reset-Leitung der Baugruppe C2 mit der Reset-Leitung des Bussystems verbunden. Im Ausführungsbeispiel der Fig. 2 sind die Busleitungen L1 bis Ln entsprechend dem Code räumlich gekreuzt, so daß auch die üblicherweise für Steckplätze verwendeten Steckerleisten jeweils identisch aufgebaut sind.

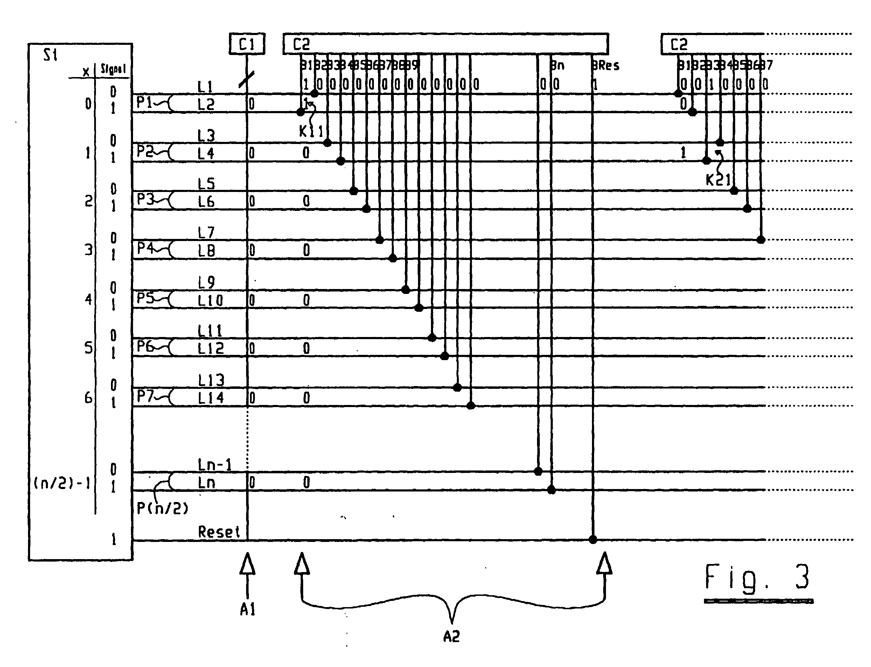

Im Ausführungsbeispiel der Fig. 3 verlaufen alle Busleitungen L1 bis Ln geradlinig und die Leitungsvertauschung (z. B. K11) erfolgt dadurch, daß die Leitung B1 mit der Leitung L2 und die Leitung B2 mit der Leitung L1 verbunden werden und in analoger Weise bei den anderen Baugruppen die entsprechenden Anschlüsse gemäß der Codierung vorgenommen werden. Die Leitungsvertauschung kann demnach durch entsprechendes Anlöten der Baugruppen an das Bussystem erfolgen oder durch entsprechende Konfiguration der Steckerleisten, was den Vorteil hat, daß man auch bisherige Computer mit einem herkömmlichen Bus (z.B. ISA-Bus) nur durch Änderung der Steckerleisten zu einem selbstkonfigurierenden modularen Computersystem nach der Erfindung umrüsten kann.

Fig. 4 zeigt ein Ausführungsbeispiel einer Schaltung für eine Identifizierung der einzelnen Baugruppen und für die Rückvertauschung der Anschlüsse auf den entsprechenden Modulen am Beispiel der Leitungen L1 bis L4. Die entsprechende Schaltungsanordnung S1 ist Bestandteil des jeweiligen Modules (z.B. C1) und enthält pro Leitungspaar (z. B. L1, L2 und L3, L4) je einen Multiplexer M1, M2 etc. mit vier Eingängen E1, E2, E3 und E4, einem mit "Select" bezeichneten Steuereingang sowie mit zwei Ausgängen A1 und A2. Die Eingänge E1 und E2 bzw. E3 und E4 bilden jeweils ein Eingangspaar, wobei jeder Multiplexer in Abhängigkeit vom Logikpegel am Select-Eingang wahlweise den einen oder anderen Eingang eines Paares mit einem zugeordneten Ausgang verbindet (Schaltstellungen A und B). Die vom Bus kommende Leitung L1 ist mit den Eingängen E1 und E4 des Multiplexers M1 verbunden. Die entsprechende Leitung L2 ist mit den Eingängen E2 und E3 verbunden. Liegt am Select-Eingang des Multiplexers M1 der Logikpegel "0", so ist der Eingang E1 mit dem Ausgang A1 und der Eingang E3 mit dem Ausgang A2 verbunden. Liegt am Select-Eingang dagegen der Logikpegel "1", so ist E2 mit A1 und E4 mit A2 verbunden, d.h. am Ausgang des Multiplexers sind die Leitungen gegenüber dem zuvor beschriebenen Zustand vertauscht.

Diese Rückvertauschung darf natürlich nur bezüglich der Leitungen durchgeführt werden, die an der betreffenden Anschlußstelle vertauscht sind. Zu diesem Zweck ist für jedes Leitungspaar ein Latch vorgesehen, dessen Enable-Anschluß mit der Reset-Leitung, dessen Eingangsanschluß mit einer der Leitungen des zugeordneten Leitungspaares und dessen Ausgangsanschluß mit dem Select-Eingang des Multiplexers M1 verbunden ist. Der Latch wird durch ein Reset-Signal aktiviert, gibt den an seinem Eingang liegenden Pegel zum Select-Eingang des Multiplexers M1 und speichert den letzten Zustand an seinem Eingang. Der Latch ist ein sogenannter "transparenter" Latch, der bei aktiviertem Enable-Eingang den Zustand an seinem (Daten)-Eingang zum Ausgang durchschaltet und bei deaktiviertem Enable-Eingang den letzten Zustand an seinem (Daten)-Eingang speichert.

Sind die Busleitungen L1 und L2 - wie in Fig. 4 durch gestrichelte Linien dargestellt - vertauscht, so liegt während des Reset-Signales am Eingang des Latch 1 der logische Pegel "1" (von der Busleitung L2) und an den Eingängen E2 und E3 des Multiplexers eine logische "0" von der Busleitung L1. Damit liegt während des Reset-Signales am Eingang des Latch eine logische "1", die schon während des Reset-Signales zum Ausgang des Latch 1 und damit zum Select-Eingang des Multiplexers M1 durchgeschaltet wird, worauf der Multiplexer in den Schaltzustand "1" bzw. "B" gebracht wird, bei dem die Leitungen L1 und L2 rückvertauscht werden. (E2 ist mit A1 und E4 mit A2 verbunden.)

Sind dagegen die Leitungen L1 und L2 unvertauscht, so wäre die Leitung L1 mit dem Eingang des Latch 1 verbunden. Während des Reset-Signales liegt dann eine "0" am Eingang des Latch, so daß das Latch 1 seinem Ausgang eine "0" führt und der Multiplexer M1 in den Schaltzustand 0 bzw. A gebracht wird, bei welchem die beiden Eingangsleitungen L1 und L2 unvertauscht durchgeschaltet werden. (E1 ist mit A1 und E3 mit A2 verbunden.)

Der Latch speichert also das "Merkmal", ob die Leitungen des jeweiligen Leitungspaares an der entsprechenden Anschlußstelle vertauscht oder unvertauscht sind. Eine "0" am Ausgang des Latch bedeutet bei diesem Ausführungsbeispiel "unvertauschtes" Busleitungspaar und eine "1" bedeutet "vertauschtes" Busleitungspaar.

Für jedes Busleitungspaar ist jeweils ein eigenes Latch und ein eigener Multiplexer vorhanden. In Fig. 4 sind die entsprechenden Einrichtungen noch für das zweite Busleitungspaar L3 und L4 dargestellt, wobei diese Einrichtungen (Latch 2 und Multiplexer M2) in gleicher Weise verschaltet sind wie Latch 1 und Multiplexer M1. Die Ausgangsleitungen der Multiplexer, die mit L1 (intern), L2 (intern) etc. bezeichnet sind, führen also jeweils die "korrekten" Signale der Busleitungen ohne Leitungskreuzungen bzw. -vertauschungen. Die Ausgänge aller Latch-Schaltungn bilden dann ein binäres Datenwort, das die jeweilige Anschlußstelle des einzelnen Modules identifiziert. Dieses Datenwort, d. h. die Signal am Ausgang aller Latch-Schaltungen werden dann intern im Modul zur Bildung der Modulnummer oder Adresse verwendet.

Während des Reset-Signales muß den Leitungen L1 und L2 ein vorgegebener Signalpegel eingeprägt werden, was hier durch sogenannte Pull-up- bzw. Pull-down-Widerstände erfolgt. Die Leitung L1 ist über einen Pull-down-Widerstand Pd mit Masse und die Leitung L2 über einen Pull-up-Widerstand Pu mit Signalspannung (+) verbunden. Nach dem Reset-Signal können diese Widerstände abgeschaltet werden, d.h. die Versorgungsspannung für den Pull-up-Widerstand Pu bzw. die Masseleitung für den Pull-down-Widerstand Pd werden dann abgschaltet, so daß diese Anschlußpunkte potentialfrei sind. Mit diesen Widerständen, wird während der Dauer des Reset-Signales der vordefinierte Signalpegel auf die Leitungen eingeprägt, so daß in diesem Falle eine separate Steuereinheit St nicht erforderlich ist. Dadurch ist es möglich, ein Bussystem nur mit Modulen aufzubauen, wobei es gleichgültig ist, ob und wie viele Module einen eigenen Prozessor (CPU) haben.

Mit der Erfindung ist es nicht nur möglich, den jeweiligen Steckplatz jedes Moduls zu identifizieren sondern auch festzustellen, welches Modul das letzte Modul (am Leitungsende der Busleitungen) ist. Damit ergibt sich die Möglichkeit, einen Busabschluß automatisch zuzuschalten. Viele Bussysteme, wie z. B. der SCSI-Bus für Festplatten oder CD-Rom Laufwerke oder ähnliches in Personal-Computern benötigen einen sogenannten Busabschluß am bzw. nach dem letzten Gerät. Mit der Erfindung kann nach der automatischen Steckplatznummernvergabe während der Resetphase erkannt werden, wer der "letzte" Busteilnehmer bzw. wo der Bus zu Ende ist. Dieses letzte Modul kann dann automatisch den Busabschluß auf den Bus legen. Damit können sehr viele Konfigurationsfehler vermieden werden. Jeder aufgesteckte Busteilnehmer würde zu diesem Zweck während der Resetphase eine ihn bzw. seiner Steckplatznummer zugeordnete Busleitung auf logisch "0" legen, beispielsweise der Busteilnehmer 1 (Modul C1) die Leitung L1, der Busteilnehmer 2 (Modul C2) die Leitung L2 etc. Jeder Busteilnehmer kann dann identifizieren, ob er der letzte ist und darauf, falls dies zutrifft, den Busabschluß zuschalten. Auch dieser Zustand kann nach dem Ende des Reset-Vorganges wieder in einem transparenten Latch festgehalten werden.

## Patentansprüche

1. Selbstkonfigurierendes modulares Elektroniksystem mit einem mehrere Leitungen (L1 ... Ln, Res) aufweisenden Daten- und Adreßbus und
mit mehreren adressierbaren Baugruppen (C1 ... Cm), die jeweils eine Anzahl von Baugruppenleitungen (B1 ... Bn, BRes) aufweisen, wobei jede einzelne Baugruppenleitung mit einer zugeordneten Busleitung elektrisch verbunden ist,
wobei die miteinander zu verbindenden Baugruppenleitungen (B1 ... Bn) und Busleitungen (L1 ... Ln) paarweise derart miteinander vertauscht sind,
wobei jede Baugruppe (C1 ... Cm) hinsichtlich der vertauschten Leitungen an eine unterschiedlich konfigurierte Stelle des Daten- und Adreßbus angeschlossen ist,
wobei Einrichtungen (Sp; Pu, Pd) vorgesehen sind, die zu einem vorbestimmten Zeitpunkt ein vorbestimmtes Signal (0,1) auf jede Leitung (L1 ... Ln) des Datenund Adreßbus geben,
wobei jede Baugruppe (C1 ... Cm) Einrichtungen (Latch 1, Latch 2 ...) enthält, die zu diesem vorbestimmten Zeitpunkt die Signale auf dem Datenund Adreßbus lesen und daraus eine individuelle Adresse für jede Baugruppe (C1 ... Cm) ermitteln,
wobei jede Baugruppe (C1 ... Cm) Einrichtungen (S1) enthält, die beim nachfolgenden Betrieb die Signale auf den vertauschten Busleitungen rückvertauscht
**dadurch gekennzeichnet,**
**daß** die Einrichtungen (S1) zum Rückvertauschen pro Leitungspaar (L1, L2; ...) je einen Multiplexer (M) und ein Latch aufweisen, wobei der Latch das Signal auf einer Leitung des Leitungspaares während des vorbestimmten Zeitpunktes abfragt und speichert und den Multiplexer (M) in Abhängigkeit von diesem Signal steuert.

2. Computersystem nach Anspruch 1,
**dadurch gekennzeichnet,**
**daß** jeweils Paare von Busleitungen (L1, L2; L3, L4; .... L(n-1), Ln) nach einem vorgegebenen Codemuster im räumlichen Bereich zwischen benachbarten Anschlußstellen von Baugruppen gekreuzt sind.

3. Computersystem nach Anspruch 2,
**dadurch gekennzeichnet,**
**daß** das Codemuster ein Binärcode ist.

4. Computersystem nach Anspruch 3,
**dadurch gekennzeichnet,**
**daß** Busleitungen (L1, L2) eines ersten Leitungspaares zwischen jeden benachbarten Anschlußstellen (A1, A2, ... Am) gekreuzt sind,
**daß** Busleitungen (L3, L4) eines zweiten Leitungspaares (P2) nach jeder zweiten aufeinanderfolgenden Anschlußstelle (A2, A4, A6 ...) gekreuzt sind (Kreuzungsstellen K21, K22, K23) usw.,
**daß** ein Leitungspaar mit der Ordnungszahl x jeweils nach 2^{x} Anschlußstellen gekreuzt ist, wobei das erste Leitungspaar die Ordnungszahl 0 hat.

5. Computersystem nach einem der Ansprüche 1 bis 4,
**dadurch gekennzeichnet,**
**daß** der vorbestimmte Zeitpunkt durch ein Signal (Reset) auf einer Steuerleitung (Res) festgelegt ist.

6. Computersystem nach einem der Ansprüche 1 bis 5,
**dadurch gekennzeichnet,**
**daß** alle Baugruppen (C1 ... Cm) hinsichtlich ihrer Hardware identisch sind.

7. Computersystem nach einem der Ansprüche 1 bis 5,
**dadurch gekennzeichnet,**
**daß** Einrichtungen vorgesehen sind, die feststellen, welche der Baugruppen am Ende des Bussystems angeschlossen ist und daß die dadurch als "letzte" Baugruppe identifizierte Baugruppe einen Busabschluß auf die Leitungen (L1 ... Ln) schaltet.

## Claims

1. Self-configuring modular electronic system with a data and adress bus featuring several lines (L1 ... Ln, Res) and
with several addressable assemblies (C1 ... Cm) each featuring a number of assembly lines (B1 ... Bn, BRes), whereby each individual assembly line is electrically connected to one associated bus line,
whereby the assembly lines (B1 ... Bn) and bus lines (L1 ... Ln) to be connected to each other are exchanged with each other in pairs in such a manner,
whereby each assembly (C1 ... Cm) is connected to a differently configured location of the data and address bus with respect to the exchanged lines,
whereby devices (St; Pu, Pd) are provided which output a predefined signal (0,1) to each line (L1 ... Ln) of the data and address bus at a predefined point in time,
whereby each assembly (C1 ... Cm) contains devices (latch 1, latch 2 ...) which read at this predefined point in time those signals on the data and address bus and from this determine an individual address for each assembly (C1 ... Cm),
whereby each assembly (C1 ... Cm) contains devices (S1) which during subsequent operation, they reverse-exchange the signals on the exchanged bus lines,
**characterized in**
**that** the devices (S1) for reverse-exchange each feature one multiplexer (M) and one latch per line pair (L1, L2; ...), whereby the latch polls and stores the signal on one line of the line pair during the predefined point in time and drives the multiplexer (M) as a function of this signal.

2. Computer system according to Claim 1, **characterized in**
**that** respective pairs of bus lines (L1, L2; L3, L4; .... L(n-1), Ln) are intersected according to a specified code pattern in the spatial zone between neighboring connection sites of assemblies.

3. Computer system according to Claim 2, **characterized in**
**that** the code pattern is a binary code.

4. Computer system according to Claim 3, **characterized in**
**that** bus lines (L1, L2) of a first line pair are intersected between every neighboring connection sites (A1, A2, ... Am),
**that** bus lines (L3, L4) of a second line pair (P2) are intersected after every second sequential connection site (A2, A4, A6 ...) (intersection sites K21, K22, K23) etc.,
**that** one line pair with the ordinal number x is intersected after each 2^{x} connection sites, whereby the first line pair has ordinal number 0.

5. Computer system according to one of Claims 1 to 4, **characterized in**
**that** the predefined point in time is established by a signal (Reset) on a control line (Res).

6. Computer system according to one of Claims 1 to 5, **characterized in**
**that** all assemblies (C1 ... Cm) are identical with respect to hardware.

7. Computer system according to one of Claims 1 to 5, **characterized in**
**that** devices are provided which determine which of the assemblies is connected to the end of the bus system and that the assembly identified as the "last" assembly switches one bus terminal to the lines (L1 ... Ln).

## Revendications

1. Système électronique modulaire à autoconfiguration, avec un bus de données et d'adresses présentant plusieurs lignes (L1 ... Ln, Res) et
avec plusieurs ensembles adressables (C1 ... Cm) qui présentent respectivement un certain nombre de lignes d'ensemble (B1 ... Bn,. BRes), chaque ligne d'ensemble individuelle étant reliée électriquement à une ligne correspondante du bus,
les lignes d'ensemble (B1 ... Bn) et les lignes du bus (L1 ... Ln) à relier entre elles étant permutées entre elles par paires,
chaque ensemble (C1 ... Cm) étant connecté, en ce qui concerne les lignes permutées, à un endroit du bus de données et d'adresses configuré différemment,
des dispositifs (St ; Pu, Pd) étant prévus, qui à un instant prédéfini envoient un signal prédéfini (0, 1) sur chaque ligne (L1 ... Ln) du bus de données et d'adresses,
chaque ensemble (C1 ... Cm) contenant des dispositifs (latch 1, latch 2 ...) qui à cet instant prédéfini lisent les signaux sur le bus de données et d'adresses et à partir de là déterminent une adresse individuelle pour chaque ensemble (C1 ... Cm),
chaque ensemble (C1 ... Cm; contenant des dispositifs (S1) qui, lors de l'exploitation consécutive, repermutent les signaux sur les lignes du bus permutées,
**caractérisé en ce que**
les dispositifs (S1) pour la repermutation sur chaque paire de lignes (L1, L2 ; ...) présentent respectivement un multiplexeur (M) et un circuit de verrouillage, le circuit de verrouillage scrutant et mémorisant à l'instant prédéfini le signal présent sur une ligne de la paire de lignes et commandant le multiplexeur (M) en fonction de ce signal.

2. Système d'ordinateur selon la revendication 1,
**caractérisé en ce que**
des paires de lignes du bus (L1, L2 ; L3, L4 ; .... L(n-1), Ln) sont respectivement croisées, selon un modèle de code prédéterminé, dans la zone spatiale entre des points voisins de connexion d'ensembles.

3. Système d'ordinateur selon la revendication 2,
**caractérisé en ce que**
le modèle de code est un code binaire.

4. Système d'ordinateur selon la revendication 3,
**caractérisé en ce que**
les lignes de bus (L1, L2) d'une première paire de lignes sont croisées entre tous les points de connexion voisins (A1, A2 ... Am),
les lignes de bus (L3, L4) d'une deuxième paire de lignes (P2) sont croisées tous les deux points de connexion successifs (A2, A4, A6 ...) (points de croisement K21, K22, K23) etc.,
la paire de lignes ayant le nombre ordinal x est croisée respectivement après 2^{x} points de connexion, la première paire de lignes ayant le nombre ordinal 0.

5. Système d'ordinateur selon l'une des revendications 1 à 4,
**caractérisé en ce que**
l'instant prédéfini est fixé par un signal (reset) sur une ligne de commande (Res).

6. Système d'ordinateur selon l'une des revendications 1 à 5,
**caractérisé en ce que**
tous les ensembles (C1 ... Cm) sont identiques en ce qui concerne leur structure matérielle.

7. Système d'ordinateur selon l'une des revendications 1 à 5,
**caractérisé en ce que**
des dispositifs sont prévus, qui déterminent lequel des ensembles est connecté en fin du système de bus, et l'ensemble identifié de ce fait comme étant le « dernier » ensemble commute une terminaison de bus sur les lignes (L1 ... Ln).
